# EUROPEAN PATENT SPECIFICATION

(11) **EP 3 381 855 B1**
(45) Date of publication and mention of the grant of the patent: **27.01.2021**
(21) Application number: 18164227.3
(22) Date of filing: 27.03.2018
(51) Int. Cl.: B66B 5/18

(54) **SAFETY BRAKE ACTUATION MECHANISM FOR A HOISTED STRUCTURE**
SICHERHEITSBREMSBETÄTIGUNGSMECHANISMUS FÜR EIN HEBEZEUG
MÉCANISME D'ACTIONNEMENT DE FREIN DE SÉCURITÉ POUR UNE STRUCTURE HISSÉE

(30) Priority: 29.03.2017 US 201715473062
(43) Date of publication of application: 03.10.2018
(73) Proprietor: Otis Elevator Company, Farmington, Connecticut 06032 (US)
(72) Inventor: Watson, Benjamin J., Farmington, CT Connecticut 06032 (US); Khzouz, Erik, Farmington, CT Connecticut 06032 (US)
(74) Representative: Schmitt-Nilson Schraud Waibel Wohlfrom Patentanwälte Partnerschaft mbB

(56) References cited:
- EP-A1- 3 112 306
- WO-A1-2012/128758
- US-A1- 2012 152 663

## Description

The embodiments herein relate to braking systems and, more particularly, to a brake actuation mechanism for braking systems, such as those employed to assist in braking a hoisted structure.

Hoisting systems, such as elevator systems and crane systems, for example, often include a hoisted structure (e.g., elevator car), a counterweight, and a tension member (e.g., rope, belt, cable, etc.) that connects the hoisted structure and the counterweight. During operation of such systems, a safety braking system is configured to assist in braking the hoisted structure relative to a guide member, such as a guide rail, in the event the hoisted structure exceeds a predetermined velocity or acceleration.

Prior attempts to actuate a braking device typically require a mechanism that includes a governor, a governor rope, a tension device and a safety actuation module. The safety actuation module comprises lift rods and linkages to actuate the safeties, also referred to as a braking device. Reducing, simplifying or eliminating components of this mechanism, while providing a reliable and stable braking of the hoisted structure, would prove advantageous.

WO 2012/128758 A1 shows an elevator system includes one or more rails fixed in a hoistway and an elevator car configured to move through the hoistway along the one or more rails. The system includes one or more braking systems having one more braking surfaces secured to the elevator car and frictionally engageable with one or more rails of the elevator system. One or more actuators are operably connected to the one or more braking surfaces configured to urge engagement and/or disengagement of the one or more braking surfaces with the rail to stop and/or hold the elevator car during operation of the elevator system.

EP 3 112 306 A1 shows a selectively operable safety brake including a magnetic brake operably coupled to a rod and disposed adjacent to a metal component, the magnetic brake configured to move between an engaging position and a non-engaging position, said magnetic brake, when in the engaging position contemporaneously with motion of the machine, moving the rod in to thereby move the safety brake from the non-braking state into the braking state, and an electromagnetic component including a retention apparatus, the electromagnetic component configured to move the magnetic brake from the engaging position to the non-engaging position upon receipt of a resetting signal.

US 2012/152663 A1 shows a safety gear connected to a device for actuating the safety gear. The device for actuating the safety gear contains a coupler body, which can be pressed against the elevator hoistway, possibly against the guiderail or braking rail, wherein actuation of the safety gear is effected by a relative movement between the pressed-on coupler body and the safety gear. For this purpose, the coupler body can contain a curved coupler surface, which, in case of need, is brought into engagement with the elevator hoistway, or with the guiderail or braking rail.

According to one aspect of the invention, a safety brake actuation mechanism comprises the features of claim 1.

Particular embodiments may include any of the following optional features, alone or in combination:
The first brake member may comprise a rectangular bar.

The first brake member may comprise a plurality of rectangular bars in a stacked arrangement.

The retaining assembly may comprise a pair of teeth engaged with the first brake member in the non-braking position.

The retaining assembly may comprise a linkage.

The safety brake actuation mechanism further may comprise a biasing member operatively coupled to the housing, the biasing member biasing the first brake member toward the braking position, the electric actuator exerting a force on the retaining assembly in the powered state that overcomes a biasing force exerted by the biasing member on the first brake member.

The biasing member may comprise a spring.

The electric actuator may be a solenoid.

The electric actuator may be coupled to the retaining assembly with a rigid rod.

According to a non-claimed aspect of the disclosure, a safety brake actuation mechanism for a hoisted structure includes a housing operatively coupled to the hoisted structure. Also included is a cam coupled to the housing and having a brake surface for frictionally engaging a surface of a guide rail, the cam moveable between a braking position and a non-braking position. Further included is a retaining assembly moveable between a first position and a second position and engageable with the cam, the cam in the non-braking position when the retaining assembly is in the first position, the retaining assembly engageable with the cam to bias the cam to the braking position upon movement to the second position. Yet further included is an electric actuator operatively coupled to the retaining assembly and biasing the retaining assembly to the first position in a powered state of the electric actuator, the retaining assembly movable to the second position in a non-powered state of the electric actuator.

Particular embodiments may include any of the following optional features, alone or in combination:
The retaining assembly amy comprise a curved surface engageable with the cam to bias the cam to the non-braking position.

The electric actuator may be a solenoid.

The electric actuator may be coupled to the retaining assembly with a rigid rod.

According to another non-claimed aspect of the disclosure, an elevator system includes an elevator car moveable within an elevator passage. Also included is a guide rail extending along a wall of the elevator passage. Further included is a housing operatively coupled to the elevator car. Yet further included is a first brake member coupled to the housing and having a first brake surface for frictionally engaging a first surface of the guide rail. Also included is a second brake member coupled to the housing and having a second brake surface for frictionally engaging a second surface of the guide rail, the second surface an opposing surface relative to the first surface, the first and second brake members moveable between a braking position and a non-braking position. Further included is a linkage moveable between a first position and a second position and engageable with the first brake member and the second brake member, the linkage retaining the first and second brake members in the non-braking position in the first position and permitting the first brake member to move to the braking position in the second position. Yet further included is a solenoid operatively coupled to the linkage and biasing the linkage to the first position in a powered state of the solenoid, the linkage movable to the second position in a non-powered state of the solenoid. Also included is a spring operatively coupled to the housing, the spring biasing the first brake member and the second brake member toward the braking position, the solenoid exerting a force on the linkage in the powered state that overcomes a biasing force exerted by the spring on the first brake member and the second brake member.

Particular embodiments may include any of the following optional features, alone or in combination:
The first brake member and the second brake member may each comprise at least one rectangular bar.

The linkage may comprise a first pair of teeth engaged with the first brake member and a second pair of teeth engaged with the second brake member in the non-braking position.

The present disclosure is illustrated by way of example and not limited in the accompanying figures in which like reference numerals indicate similar elements.
FIG. 1 is a perspective view of a safety brake actuation mechanism in a non-braking position according to an aspect of the disclosure;
FIG. 2 is a perspective view of the safety brake actuation mechanism of FIG. 1 in a braking position;
FIG. 3 is a perspective view of the safety brake actuation mechanism according to a non-claimed aspect of the disclosure; and
FIG. 4 is a perspective view of a safety that is actuated by the safety brake actuation mechanism.

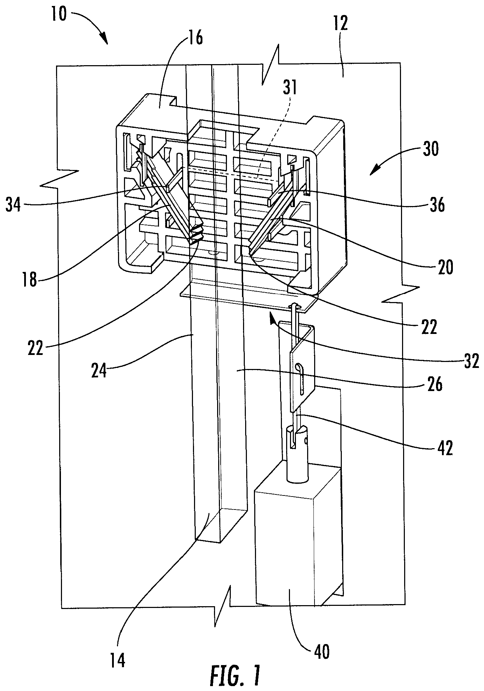

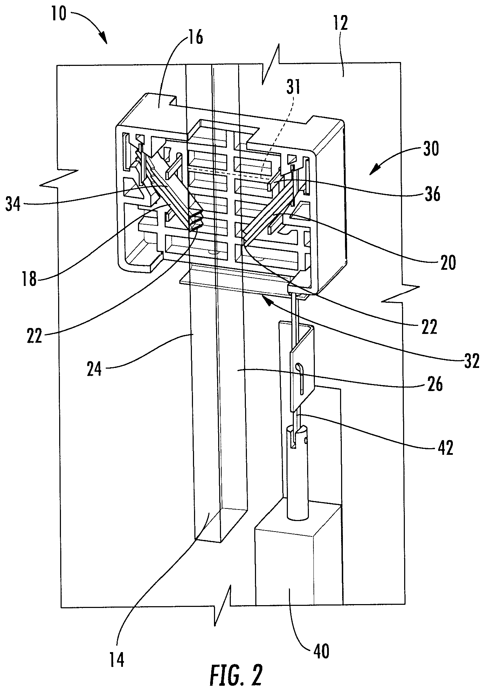

FIGS. 1 and 2 illustrate a hoisted structure braking system 10. The embodiments described herein relate to an overall braking system that is operable to assist in braking (e.g., slowing or stopping movement) of a hoisted structure relative to a guide member, as will be described in detail below. In particular, a braking actuation assembly that lifts a safety configured for braking a hoisted structure is described herein. The braking system 10 can be used with various types of hoisted structures and various types of guide members, and the configuration and relative orientation of the hoisted structure and the guide member may vary. In one embodiment, the hoisted structure comprises an elevator car 12 moveable within passage hoistway.

The guide member, referred to herein as a guide rail 14, is connected to a sidewall of the elevator car passage and is configured to guide the hoisted structure, typically in a vertical manner. The guide rail 14 may be formed of numerous suitable materials, typically a durable metal, such as steel, for example.

The braking system 10 includes a housing 16 that is operatively coupled to the elevator car 12 in a location proximate the guide rail 14. The housing 16 is directly or indirectly connected to the elevator car 12 in a manner that allows the housing 16 to move vertically to an extent that accommodates lifting of a wedge of a safety 21. At least one brake member, referred to as a first brake member 18 is coupled to the housing 16. As shown, a second brake member 20 is included in some embodiments and is similarly coupled to the housing 16. The brake members 18, 20 extend from the housing 16 inwardly toward the guide rail 14 and may be any suitable shape. In some embodiments, the brake members 18, 20 are each at least one rectangular bar and may each be a stacked arrangement of rectangular bars, as illustrated. Irrespective of the precise shape, the brake members 18, 20 each include a respective brake surface 22 at an end thereof. The brake surface 22 may be a brake pad or a similar structure suitable for repeatable braking engagement with the guide rail 14. In particular, the brake surface 22 of the first brake member 18 is configured to engage a first surface 24 of the guide rail 14 and the brake surface 22 of the second brake member 20 is configured to engage a second surface 26 of the guide rail 14. The first and second surfaces 24, 26 of the guide rail 14 are on opposite sides of the guide rail 14 in some embodiments. In one embodiment, the brake surface 22 may be integral with each of the brake members 18, 20. In one embodiment, a one movable brake member and one fixed brake member may be employed. In one embodiment, more than two brake members 18, 20 may be used.

The brake members 18, 20 are positioned on the housing 16 in a manner that disposes the brake members 18, 20 in proximity with the guide rail 14. Specifically, the brake surfaces 22 are disposed in close proximity to the guide rail 14 and are operable to frictionally engage the guide rail 14. The brake members 18, 20 are moveable between a non-braking position (FIG. 1) to a braking position (FIG. 2). The non-braking position is a position that the braking system 10 is disposed in during normal operation of the elevator car 12. In particular, the brake members 18, 20 are not in contact with the guide rail 14 while in the non-braking position, and thus the brake surfaces 22 do not frictionally engage the guide rail 14. Subsequent to movement of the brake members 18, 20, the brake surfaces 22 are in contact with the guide rail 14, thereby frictionally engaging the guide rail 14.

An actuation mechanism 30 includes a retaining assembly 32 comprising a linkage for retaining the brake members 18, 20 in the non-braking position. As shown, the brake members 18, 20 are oriented at a non-parallel angle relative to a longitudinal axis of the guide rail 14, as well as relative to the first and second surfaces 24, 26 of the guide rail 14. In some embodiments, the brake members 18, 20 are oriented at an angle of between 0 and 90 degrees relative to the surfaces 24, 26 of the guide rail 14.

As described above, the retaining assembly 32 retains the brake members 18, 20 in the non-braking position when the retaining assembly 32 is in a first position (FIG. 1). In the illustrated embodiment, the retaining assembly 32 includes a first pair of teeth 34 for retaining the first brake member 18 in the non-braking position and a second pair of teeth 36 for retaining the second brake member 20 in the non-braking position. It is contemplated that a single or multiple teeth, a hook, a latch, or the like may be employed to contact the brake members 18, 20. Furthermore, in some embodiments the brake members 18, 20 are connected and only one of the brake members 18 or 20 is in contact with the retaining assembly 32. The retaining assembly 32 is operatively coupled to an electric actuator 40 that exerts a force on the retaining assembly 32 when the electric actuator 40 is in a powered state (e.g., energized state), as shown in FIG. 1. In some embodiments, the electric actuator 40 is a solenoid. The electric actuator 40 may be directly coupled to the retaining assembly 32 or may be indirectly coupled thereto with a rigid rod 42 or the like. In the powered state, the electric actuator 40 exerts a force on the retaining assembly 32 that biases the retaining assembly 32 into the first position, thereby placing the brake members 18, 20 in the non-braking position (FIG. 1).

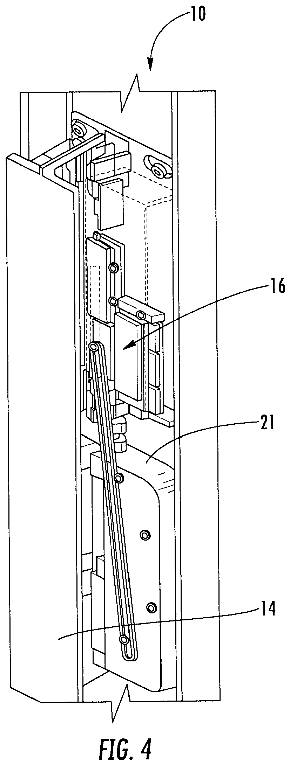

In a non-powered state of the electric actuator 40, the force exerted on the retaining assembly 32 is removed and the retaining teeth 34, 36 are displaced during movement of the retaining assembly 32 to the second position, thereby allowing movement of the brake members 18, 20 (FIG. 2). In the second position, a biasing member, such as a spring 31 that is coupled to the housing 16 drives the brake members 18, 20 into contact with the guide rail 14 during movement from the non-braking position to the braking position. The biasing member is a pneumatic or hydraulic device in other embodiments. In the braking position, the frictional force between the brake surfaces 22 of the brake members, 18, 20 and surfaces 24, 26 of the guide rail 14 triggers lifting of a safety wedge that is part of a safety 21 to stop movement of the elevator car 12 relative to the guide rail 14 (FIG. 4). In the first position of the retaining assembly 32, during the powered state of the electric actuator 40, the retaining force exerted on the brake members 18, 20 is sufficient to overcome the biasing force of the spring, but once the retaining assembly 32 is shifted to the second position, the spring force is free to initiate engagement between the brake members 18, 20 and the guide rail 14.

In some embodiments, two solenoids are included. Each solenoid is operatively coupled to a respective biasing member, with each biasing member biasing the retaining teeth.

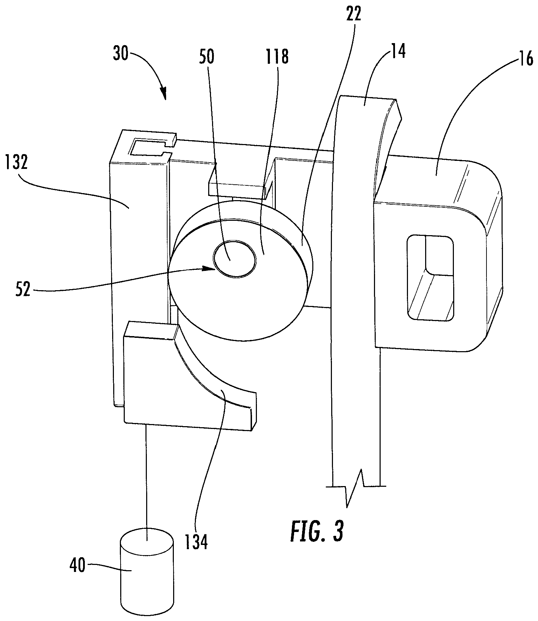

Referring now to FIG. 3, the safety brake actuation mechanism 30 is illustrated according to a non-claimed embodiment. In the illustrated embodiment, a cam 118 is the brake member that is coupled to the housing 16 in a rotatable manner via a pin 50 extending through an aperture 52 defined by the cam 118. The cam 118 includes an outer surface that is the brake surface 22 for engaging a surface of the guide rail 14. A retaining assembly 132 includes a curved portion 134 that is not in contact with the cam 118 in the first position (FIG. 3). Upon movement to the second position of the retaining assembly 132, the curved portion 134 engages the cam 118 and biases the cam 118 toward the guide rail 14 until the brake surface 22 engages the guide rail 14 for frictional engagement. In some embodiments, an additional cam is disposed on the opposing side of the guide rail 14, relative to cam 118 to form a symmetric arrangement.

As with the embodiments of FIGS. 1 and 2, the electric actuator 40, such as a solenoid maintains the retaining assembly 132 in the first position during a powered state of the electric actuator 40. Upon switching to the non-powered state of the electric actuator 40, the retaining assembly 132 is biased upwardly by a spring or the like to initiate the above-described engagement of the curved portion 134 with the cam 118.

In operation, for each of the embodiments described herein, an electronic sensor and/or control system (not illustrated) is configured to monitor various parameters and conditions of the hoisted structure and to compare the monitored parameters and conditions to at least one predetermined condition. In one embodiment, the predetermined condition comprises velocity and/or acceleration of the hoisted structure. In the event that the monitored condition (e.g., over-speed, over-acceleration, etc.) exceeds the predetermined condition, the brake member(s) is actuated upon de-energization of the electric actuator 40 to facilitate mechanical engagement of the brake member(s) and the guide rail 14. Additionally, if system power is lost, the electric actuator 40 may enter the non-powered state and actuation of the brake member(s) is initiated.

While the disclosure has been described in detail in connection with only a limited number of embodiments, it should be readily understood that the disclosure is not limited to such disclosed embodiments. Accordingly, the disclosure is not to be seen as limited by the foregoing description, but is only limited by the scope of the appended claims.

## Claims

1. A safety brake actuation mechanism (10) for a hoisted structure comprising:
a housing (16) operatively coupled to the hoisted structure;
a first brake member (18, 20) coupled to the housing (16) and having a brake surface (22) for frictionally engaging a first surface (24) of a guide rail (14), the first brake member (18, 20) moveable between a braking position and a non-braking position;
a retaining assembly (32) moveable between a first position and a second position and engageable with the first brake member (18, 20), the retaining assembly (32) retaining the first brake member (18, 20) in the non-braking position in the first position and permitting the first brake member (18, 20) to move to the braking position in the second position; and
an electric actuator (40) operatively coupled to the retaining assembly (32) and biasing the retaining assembly (32) to the first position in a powered state of the electric actuator (40), the retaining assembly (32) movable to the second position in a non-powered state of the electric actuator (40);
the safety brake actuation mechanism (10) further comprising a second brake member coupled to the housing (16) and having a brake surface (22) for frictionally engaging a second surface of the guide rail (14), the second surface an opposing surface relative to the first surface, the second brake member retained by the retaining assembly (32) and moveable between the braking position and the non-braking position;
**characterized in that**
the first brake member (18, 20) and the second brake member are angled at less than 90 degrees relative to a longitudinal axis of the guide rail (14); and
the first brake member (18, 20) and the second brake member are oriented at a non-parallel angle relative to the longitudinal axis of the guide rail (14).

2. The safety brake actuation mechanism (10) of claim 1, wherein the first brake member (18, 20) comprises a rectangular bar.

3. The safety brake actuation mechanism (10) of claim 2, wherein the first brake member (18, 20) comprises a plurality of rectangular bars in a stacked arrangement.

4. The safety brake actuation mechanism (10) of claim 1 or 2, wherein the retaining assembly (32) comprises a pair of teeth engaged with the first brake member (18, 20) in the non-braking position.

5. The safety brake actuation mechanism (10) of any of claims 1 to 4, wherein the retaining assembly (32) is comprises a linkage.

6. The safety brake actuation mechanism (10) of any of claims 1 to 5, further comprising a biasing member operatively coupled to the housing (16), the biasing member biasing the first brake member (18, 20) toward the braking position, the electric actuator (40) exerting a force on the retaining assembly (32) in the powered state that overcomes a biasing force exerted by the biasing member on the first brake member (18, 20).

7. The safety brake actuation mechanism (10) of claim 6, wherein the biasing member comprises a spring (31).

8. The safety brake actuation mechanism (10) of any of claims 1 to 7, wherein the electric actuator (40) is a solenoid.

9. The safety brake actuation mechanism (10) of any of claims 1 to 8, wherein the electric actuator (40) is coupled to the retaining assembly (32) with a rigid rod.

10. An elevator system comprising:
an elevator car (12) moveable within an elevator passage;
a guide rail (14) extending along a wall of the elevator passage; and
the safety brake actuating mechanism (10) of any of claim 1 to 9.

11. The elevator system of claim 10, wherein:
the housing (16) is operatively coupled to the elevator car (12);
the first brake member (18, 20) is coupled to the housing (16) and has a first brake surface (22) for frictionally engaging a first surface (24) of the guide rail (14);
the second brake member (18, 20) is coupled to the housing (16) and has a second brake surface (22) for frictionally engaging a second surface (26) of the guide rail (14), the second surface 26) being an opposing surface relative to the first surface (24), the first and second brake members (18, 20) moveable between a braking position and a non-braking position;
a linkage is moveable between a first position and a second position and engageable with the first brake member (18, 20) and the second brake member (18, 20), the linkage retaining the first and second brake members (18, 20) in the non-braking position in the first position and permitting the first brake member (18, 20) to move to the braking position in the second position;
a solenoid is operatively coupled to the linkage and biasing the linkage to the first position in a powered state of the solenoid, the linkage movable to the second position in a non-powered state of the solenoid; and
a spring (31) is operatively coupled to the housing (16), the spring (31) biasing the first brake member (18, 20) and the second brake member toward the braking position, the solenoid exerting a force on the linkage in the powered state that overcomes a biasing force exerted by the spring (31) on the first brake member (18, 20) and the second brake member.

## Patentansprüche

1. Sicherheitsbremsbetätigungsmechanismus (10) für ein Hebezeug, der Folgendes umfasst:
ein Gehäuse (16), das an das Hebezeug wirkgekoppelt ist;
ein erstes Bremselement (18, 20), das an das Gehäuse (16) gekoppelt ist und eine Bremsfläche (22) für einen Reibungseingriff mit einer ersten Fläche (24) einer Führungsschiene (14) aufweist, wobei das erste Bremselement (18, 20) zwischen einer Bremsstellung und einer Nichtbremsstellung bewegbar ist;
eine Haltebaugruppe (32), die zwischen einer ersten Stellung und einer zweiten Stellung bewegbar und mit dem ersten Bremselement (18, 20) in Eingriff bringbar ist, wobei die Haltebaugruppe (32) das erste Bremselement (18, 20) in der Nichtbremsstellung in der ersten Stellung hält und es dem ersten Bremselement (18, 20) erlaubt, sich zu der Bremsstellung in der zweiten Stellung zu bewegen; und
ein elektrisches Stellglied (40), das an die Haltebaugruppe (32) wirkgekoppelt ist und die Haltebaugruppe (32) zu der ersten Stellung in einem angetriebenen Zustand des elektrischen Stellglieds (40) vorspannt, wobei die Haltebaugruppe (32) zu der zweiten Stellung in einem nichtangetriebenen Zustand des elektrischen Stellglieds (40) bewegbar ist;
wobei der Sicherheitsbremsbetätigungsmechanismus (10) ferner ein zweites Bremselement umfasst, das an das Gehäuse (16) gekoppelt ist und eine Bremsfläche (22) für einen Reibungseingriff mit einer zweiten Fläche der Führungsschiene (14) aufweist, wobei die zweite Fläche eine gegenüberliegende Fläche relativ zu der ersten Fläche ist, wobei das zweite Bremselement von der Haltebaugruppe (32) gehalten wird und zwischen der Bremsstellung und der Nichtbremsstellung bewegbar ist;
**dadurch gekennzeichnet, dass**
das erste Bremselement (18, 20) und das zweite Bremselement sich in einem Winkel von weniger als 90 Grad relativ zu einer Längsachse der Führungsschiene (14) befinden; und
das erste Bremselement (18, 20) und das zweite Bremselement in einem nichtparallelen Winkel relativ zu der Längsachse der Führungsschiene (14) ausgerichtet sind.

2. Sicherheitsbremsbetätigungsmechanismus (10) nach Anspruch 1, wobei das erste Bremselement (18, 20) einen rechteckigen Stab umfasst.

3. Sicherheitsbremsbetätigungsmechanismus (10) nach Anspruch 2, wobei das erste Bremselement (18, 20) eine Vielzahl von rechteckigen Stäben in einer gestapelten Anordnung umfasst.

4. Sicherheitsbremsbetätigungsmechanismus (10) nach Anspruch 1 oder 2, wobei die Haltebaugruppe (32) ein Paar Zähne umfasst, die mit dem ersten Bremselement (18, 20) in der Nichtbremsstellung in Eingriff stehen.

5. Sicherheitsbremsbetätigungsmechanismus (10) nach einem der Ansprüche 1 bis 4, wobei die Haltebaugruppe (32) ist umfasst eine Verknüpfung.

6. Sicherheitsbremsbetätigungsmechanismus (10) nach einem der Ansprüche 1 bis 5, der ferner ein Vorspannelement umfasst, das an das Gehäuse (16) wirkgekoppelt ist, wobei das Vorspannelement das erste Bremselement (18, 20) zu der Bremsstellung hin vorspannt, wobei das elektrische Stellglied (40) eine Kraft auf die Haltebaugruppe (32) in dem angetriebenen Zustand ausübt, die eine Vorspannkraft überwindet, die von dem Vorspannelement auf das erste Bremselement (18, 20) ausgeübt wird.

7. Sicherheitsbremsbetätigungsmechanismus (10) nach Anspruch 6, wobei das Vorspannelement eine Feder (31) umfasst.

8. Sicherheitsbremsbetätigungsmechanismus (10) nach einem der Ansprüche 1 bis 7, wobei das elektrische Stellglied (40) eine Magnetspule ist.

9. Sicherheitsbremsbetätigungsmechanismus (10) nach einem der Ansprüche 1 bis 8, wobei das elektrische Stellglied (40) mit einer starren Stange an die Haltebaugruppe (32) gekoppelt ist.

10. Aufzugssystem, das Folgendes umfasst:
eine Aufzugskabine (12), die innerhalb eines Aufzugsdurchgangs bewegbar ist;
eine Führungsschiene (14), die sich entlang einer Wand des Aufzugsdurchgangs erstreckt; und
den Sicherheitsbremsbetätigungsmechanismus (10) nach einem der Ansprüche 1 bis 9.

11. Aufzugssystem nach Anspruch 10, wobei:
das Gehäuse (16) an die Aufzugskabine (12) wirkgekoppelt ist;
das erste Bremselement (18, 20) an das Gehäuse (16) gekoppelt ist und eine erste Bremsfläche (22) für einen Reibungseingriff mit einer ersten Fläche (24) der Führungsschiene (14) aufweist;
das zweite Bremselement (18, 20) an das Gehäuse (16) gekoppelt ist und eine zweite Bremsfläche (22) für einen Reibungseingriff mit einer zweiten Fläche (26) der Führungsschiene (14) aufweist, wobei die zweite Fläche (26) eine gegenüberliegende Fläche relativ zu der erste Fläche (24) ist, wobei das erste und das zweite Bremselement (18, 20) zwischen einer Bremsstellung und a Nichtbremsstellung bewegbar ist;
eine Verknüpfung zwischen einer ersten Stellung und einer zweiten Stellung bewegbar und mit dem ersten Bremselement (18, 20) und dem zweiten Bremselement (18, 20) in Eingriff bringbar ist, wobei die Verknüpfung das erste und das zweite Bremselement (18, 20) in der Nichtbremsstellung in der ersten Stellung hält und es dem ersten Bremselement (18, 20) erlaubt, sich zu der Bremsstellung in der zweiten Stellung zu bewegen;
eine Magnetspule an die Verknüpfung wirkgekoppelt ist und die Verknüpfung zu der ersten Stellung in einem angetriebenen Zustand der Magnetspule vorspannt, wobei die Verknüpfung zu der zweiten Stellung in einem nichtangetriebenen Zustand der Magnetspule bewegbar ist; und
eine Feder (31) an das Gehäuse (16) wirkgekoppelt ist, wobei die Feder (31) das erste Bremselement (18, 20) und das zweite Bremselement zu der Bremsstellung hin vorspannt, wobei die Magnetspule eine Kraft auf die Verknüpfung in dem angetriebenen Zustand ausübt, die eine Vorspannkraft überwindet, die von der Feder (31) auf das erste Bremselement (18, 20) und das zweite Bremselement ausgeübt wird.

## Revendications

1. Mécanisme d'actionnement de frein de sécurité (10) pour une structure hissée comprenant :
un boîtier (16) couplé de manière opérationnelle à la structure hissée ;
un premier élément de frein (18, 20) couplé au boîtier (16) et ayant une surface de frein (22) pour venir en prise par frottement avec une première surface (24) d'un rail de guidage (14), le premier élément de frein (18, 20) étant mobile entre une position de freinage et une position de non-freinage ;
un ensemble de retenue (32) mobile entre une première position et une seconde position et pouvant venir en prise avec le premier élément de frein (18, 20), l'ensemble de retenue (32) retenant le premier élément de frein (18, 20) dans la position de non-freinage dans la première position et permettant au premier élément de frein (18, 20) de se déplacer vers la position de freinage dans la seconde position ; et
un actionneur électrique (40) couplé de manière opérationnelle à l'ensemble de retenue (32) et sollicitant l'ensemble de retenue (32) vers la première position dans un état d'alimentation de l'actionneur électrique (40), l'ensemble de retenue (32) étant mobile vers la seconde position dans un état de non-alimentation de l'actionneur électrique (40) ;
le mécanisme d'actionnement de frein de sécurité (10) comprenant en outre un second élément de frein couplé au boîtier (16) et ayant une surface de frein (22) pour venir en prise par frottement avec une seconde surface du rail de guidage (14), la seconde surface étant une surface opposée par rapport à la première surface, le second élément de frein étant retenu par l'ensemble de retenue (32) et mobile entre la position de freinage et la position de non-freinage ;
**caractérisé en ce que**
le premier élément de frein (18, 20) et le second élément de frein sont inclinés à moins de 90 degrés par rapport à un axe longitudinal du rail de guidage (14) ; et
le premier élément de frein (18, 20) et le second élément de frein sont orientés selon un angle non parallèle par rapport à l'axe longitudinal du rail de guidage (14).

2. Mécanisme d'actionnement de frein de sécurité (10) selon la revendication 1, dans lequel le premier élément de frein (18, 20) comprend une barre rectangulaire.

3. Mécanisme d'actionnement de frein de sécurité (10) selon la revendication 2, dans lequel le premier élément de frein (18, 20) comprend une pluralité de barres rectangulaires dans un agencement empilé.

4. Mécanisme d'actionnement de frein de sécurité (10) selon la revendication 1 ou 2, dans lequel l'ensemble de retenue (32) comprend une paire de dents venant en prise avec le premier élément de frein (18, 20) dans la position de non-freinage.

5. Mécanisme d'actionnement de frein de sécurité (10) selon l'une quelconque des revendications 1 à 4, dans lequel l'ensemble de retenue (32) comprend une liaison.

6. Mécanisme d'actionnement de frein de sécurité (10) selon l'une quelconque des revendications 1 à 5, comprenant en outre un élément de sollicitation couplé de manière opérationnelle au boîtier (16), l'élément de sollicitation sollicitant le premier élément de frein (18, 20) vers la position de freinage, l'actionneur électrique (40) exerçant une force sur l'ensemble de retenue (32) dans l'état d'alimentation qui surmonte une force de sollicitation exercée par l'élément de sollicitation sur le premier élément de frein (18, 20).

7. Mécanisme d'actionnement de frein de sécurité (10) selon la revendication 6, dans lequel l'élément de sollicitation comprend un ressort (31).

8. Mécanisme d'actionnement de frein de sécurité (10) selon l'une quelconque des revendications 1 à 7, dans lequel l'actionneur électrique (40) est un solénoïde.

9. Mécanisme d'actionnement de frein de sécurité (10) selon l'une quelconque des revendications 1 à 8, dans lequel l'actionneur électrique (40) est couplé à l'ensemble de retenue (32) avec une tige rigide.

10. Système d'ascenseur comprenant :
une cabine d'ascenseur (12) mobile à l'intérieur d'un passage d'ascenseur ;
un rail de guidage (14) s'étendant le long d'une paroi du passage d'ascenseur ; et
le mécanisme d'actionnement de frein de sécurité (10) selon l'une quelconque des revendications 1 à 9.

11. Système d'ascenseur selon la revendication 10, dans lequel :
le boîtier (16) est couplé de manière opérationnelle à la cabine d'ascenseur (12) ;
le premier élément de frein (18, 20) est couplé au boîtier (16) et a une première surface de frein (22) pour venir en prise par frottement avec une première surface (24) du rail de guidage (14) ;
le second élément de frein (18, 20) est couplé au boîtier (16) et a une seconde surface de frein (22) pour venir en prise par frottement avec une seconde surface (26) du rail de guidage (14), la seconde surface (26) étant une surface opposée par rapport à la première surface (24), les premier et second éléments de frein (18, 20) étant mobiles entre une position de freinage et une position de non-freinage ;
une liaison est mobile entre une première position et une seconde position et peut venir en prise avec le premier élément de frein (18, 20) et le second élément de frein (18, 20), la liaison retenant les premier et second éléments de frein (18, 20) dans la position de non-freinage dans la première position et permettant à l'au moins un premier élément de frein (18, 20) de se déplacer vers la position de freinage dans la seconde position ;
un solénoïde est couplé de manière opérationnelle à la liaison et sollicite la liaison vers la première position dans un état d'alimentation du solénoïde, la liaison pouvant être déplacée vers la seconde position dans un état de non-alimentation du solénoïde ; et
un ressort (31) est couplé de manière opérationnelle au boîtier (16), le ressort (31) sollicitant le premier élément de frein (18, 20) et le second élément de frein vers la position de freinage, le solénoïde exerçant une force sur la liaison dans l'état d'alimentation qui surmonte une force de sollicitation exercée par le ressort (31) sur le premier élément de frein (18, 20) et le second élément de frein.
